# EUROPÄISCHE PATENTSCHRIFT

(11) **EP 2 738 239 B1**
(45) Veröffentlichungstag und Bekanntmachung des Hinweises auf die Patenterteilung: **05.09.2018**
(21) Anmeldenummer: 12450051.3
(22) Anmeldetag: 29.11.2012
(51) Int. Cl.: C10J 3/30, F23K 3/12, B65G 25/08

(54) **VERWENDUNG EINER VORRICHTUNG ZUR FÖRDERUNG VON BRENNSTOFFEN IN EINEN VERGASUNGSREAKTOR**
USE OF AN APPARATUS FOR TRANSPORTING FUELS IN A GASIFICATION REACTOR
UTILISATION D'UN DISPOSITIF DE TRANSPORT DE COMBUSTIBLES DANS UN RÉACTEUR DE GAZÉIFICATION

(43) Veröffentlichungstag der Anmeldung: 04.06.2014
(73) Patentinhaber: Care Beteiligungsverwaltung GmbH, 1040 Wien (AT)
(72) Erfinder: Rensing, Michael, 22559 Hamburg (DE)
(74) Vertreter: Keschmann, Marc

(56) Entgegenhaltungen:
- WO-A1-93/00282
- WO-A1-99/34662
- AT-B- 384 822
- GB-A- 2 317 141
- US-A- 4 650 546
- US-A1- 2009 183 430

## Beschreibung

Die Erfindung betrifft eine Vorrichtung zur Förderung von Brennstoffen in einen Vergasungsreaktor umfassend einen Schüttgutbehälter, ein Förderrohr, in das ein Austrag des Schüttgutbehälters mündet und das an eine seitliche Aufgabeöffnung des Vergasungsreaktors anschließbar ist, und eine im Förderrohr angeordnete mechanische Fördereinrichtung.

Die Erfindung betrifft weiters eine Vergasungsanlage umfassend eine Vergasungszone für die Aufnahme eines stationären Bettes und eine Verbrennungszone für die Aufnahme eines Wirbelbettes, wobei die Vergasungszone und die Verbrennungszone zur Ermöglichung eines Zirkulierens des Bettmaterials an zwei Stellen jeweils durch eine schleusenartige Einrichtung, wie eine Engstelle oder ein Siphon, miteinander verbunden sind, wobei die Vergasungszone eine Aufgabeöffnung für das Aufgeben von Brennmaterial, eine Gasabfuhr und einen Düsenboden zum Eindüsen von insbesondere Wasserdampf oder CO₂ aufweist und die Verbrennungszone eine Luftzufuhr für die Fluidisierung des aus der Vergasungszone in die Verbrennungszone eintretende Bettmaterials aufweist.

Eine Vergasungsanlage dieser Art ist aus der Patentschrift AT 405937 B bekannt geworden. Eine solche Vergasungsanlage kann dazu verwendet werden, um heterogene, biogene Brennstoffe und Kunststoffe zu verwerten und daraus ein möglichst stickstofffreies Brenngas mit hohem Brennwert oder Synthesegas zu gewinnen, das zur Stromerzeugung oder zur Synthese organischer Produkte geeignet ist. Dabei wird so vorgegangen, dass der Brennstoff in eine als stationäres Wirbelbett ausgebildete Vergasungszone, die durch Wasserdampf und/oder C0₂ fluidisiert ist, eingebracht und durch Reaktion mit den Fluidisierungsgasen bzw. dem Vergasungsmittel (Wasserdampf und/oder C0₂) und mit Hilfe der Wärme des Bettmaterials unter Luftabschluss entgast und teilweise vergast wird. Das dabei aufsteigende Produktgas wird abgezogen und das abgekühlte Bettmaterial gelangt mit dem nicht vergasten Restbrennstoff über schleusenartige Vorrichtungen, wie z.B. eine Engstelle in die Verbrennungszone. In der Verbrennungszone wird das Bettmaterial mit dem Restbrennstoff durch Luft unter Bildung eines schnellen zirkulierenden Wirbelbettes fluidisiert und der Restbrennstoff verbrannt. Das Bettmaterial wird nach Abscheidung vom Verbrennungsabgas in einem Zyklon über schleusenartige Vorrichtungen, wie z.B. einen Siphon auf die stationäre Wirbelschicht der Vergasungszone aufgegeben.

Durch die Verwendung eines katalytisch wirkenden Bettmaterials, insbesondere auf Nickel- und/oder Niobbasis, lässt sich das bei der Entgasung und Vergasung gebildete Gas veredeln, indem praktisch nur mehr CO, C0₂ und H₂ als brennbare Bestandteile, sowie Wasserdampf vorhanden sind oder ein methanreiches Gas mit hohem Brennwert erzeugt wird. Darüber hinaus lässt sich die Vergasungstemperatur von etwa 800°C auf 650°C absenken.

Die in der AT 405937 B beschriebene Vergasungsanlage eignet sich für die Vergasung von kohlenstoffhältigem Material, insbesondere von heterogenen oder biogenen Brennstoffen, wie zum Beispiel Biomasse, Kohle, Kunststoffe oder vorsortierter Müll, wobei ein Mischgas, welches CO, C0₂, H₂ und eventuell CH₄ und höhere Kohlenwasserstoffe enthält, entsteht. Findet die ganze Vergasung in Gegenwart eines Nickel- oder Niobkatalysators statt, so werden auch die Kohlenwasserstoffe, wie zum Beispiel das CH₄ in CO und H₂ umgewandelt. Durch die Vermeidung von Luftzutritt lässt sich praktisch ein stickstofffreies Produktionsgas herstellen, welches einen hohen Heizwert aufweist.

Die Zufuhr des meist als Schüttgut vorliegenden Brennstoffs in einen Vergasungsreaktor erfolgt in der Regel mit Hilfe einer mechanischen Fördereinrichtung. Die Fördereinrichtung muss hierbei einer Reihe von spezifischen, durch den Vergasungsreaktor vorgegebenen Anforderungen gerecht werden. Beispielsweise ist die Fördereinrichtung auf Grund der im Vergasungsreaktor herrschenden Temperaturen von bis zu 800°C einer hohen thermischen Belastung ausgesetzt, sodass auf eine ausreichende Kühlung der Fördereinrichtung zu achten ist. Weiters sollte die Fördereinrichtung einen Luftabschluss sicherstellen, um den Vergasungsprozess nicht zu beeinträchtigen. Weiters sollten konstruktionsbedingt ein niedriger Verschleiß und damit verbunden geringe Instandhaltungskosten gewährleistet sein. Schließlich ist es wünschenswert, wenn die Fördereinrichtung eine gute Dosierung des Brennstoffes erlaubt.

Beim Gegenstand der AT 405937 B erfolgt die Förderung in oder auf das stationäre Bett der Vergasungszone mit Hilfe einer Förderschnecke. Dies hat jedoch eine Reihe von Nachteilen, nämlich dass die Förderschnecke schlecht gekühlt werden kann und dass sie auf Grund des schwankenden Füllgrades der Schnecke keinen vollständigen Luftabschluss sicherstellt. Weiters ist die Förderschnecke störanfällig, was insofern nachteilig ist, als der Vergasungsreaktor bei jeder Störung zur Reparatur heruntergefahren werden muss.

Es besteht somit die Aufgabe, Verwendung einer Fördereinrichtung für Vergasungsreaktoren zu schaffen, mit der alle Arten von biogenen Brennstoffen kontinuierlich transportiert und in den Vergasungsraum eingeschleust werden können. Insbesondere soll die Verwendung einer Einrichtung für die Förderung von Brennstoffen verschiedener spezifischer Gewichte und unterschiedlicher Zusammensetzungen in gleicher Weise geeignet sein. Weiters sollen die oben im Zusammenhang mit dem Schneckenförderer beschriebenen Nachteile vermieden werden.

Zur Lösung dieser Aufgabe sieht die Erfindung bei einer Verwendung einer einrichtung für Vergasungsreaktoren der eingangs genannten Art im Wesentlichen vor, dass die Fördereinrichtung von einem hydraulisch antreibbaren, in einem ersten, zylindrischen Abschnitt des Förderrohrs verschieblich geführten Presskolben gebildet ist und dass das Förderrohr zur Ausbildung eines Verdichtungskonus in einem zweiten axialen Abschnitt einen sich in Förderrichtung des Brennstoffs kontinuierlich verringernden Innenquerschnitt aufweist. Bevorzugt befindet sich der Verdichtungskonus im in Förderrichtung gesehen letzten Drittel des 2. Förderrohrabschnitts. Erfindungsgemäß wird somit eine hydraulische Förderung vorgeschlagen, die den Vorteil der geringen Instandhaltungskosten bei hoher Verfügbarkeit aufweist und außerdem eine gleichmäßige Dosierung erlaubt. Der hydraulische Antrieb ermöglicht die Aufbringung hoher, in Förderrichtung wirkender Kräfte, sodass der Brennstoff beispielsweise im Falle eines Vergasungsreaktors des in der AT 405937 B gezeigten Typs in die Oberfläche des Brennstoffbettes hinein geschoben werden kann, wodurch eine gute Vermischung im Wirbelbett gewährleistet ist und Pulsationen im Vergasungsraum vermieden werden. Der Brennstoff wird hierbei dem Vorschub entsprechend kontinuierlich mit gleichbleibender Geschwindigkeit gefördert. Der Rücklauf des Presskolbens wird dann mit einer schnellen Geschwindigkeit durchgeführt, um den nächsten Förderzyklus ohne große Unterbrechung zu erreichen.

AT 384 822 B, WO 99/34662 A1 und WO 93/00282 A1 beschreiben jeweils eine Vorrichtung zur Förderung von Brennstoffen in einen Vergasungsreaktor mittels eines hydraulischen Kolbens, wobei das Förderrohr einen Verdichtungskonus aufweist mit einem sich kontinuierlich verringernden Innenquerschnitt.

GB 2 317 141 A beschreibt eine Vorrichtung zur Förderung von Brennstoffen in einen Vergasungsreaktor mittels einer Förderschnecke, wobei das Förderrohr mitsamt Verdichtungskonus als gesondertes, austauschbares Rohrstück ausgebildet ist. Mit der erfindungsgemäßen Verwendung einer hydraulischen Fördereinrichtung ist es möglich, Brennstoffe unterschiedlichster Beschaffenheit zu fördern, insbesondere Holzhackschnitzel, diverse Müllfraktionen, Kohle, weitere biogenen Stoffe aus der Landwirtschaft oder pastöse brennbare Abfälle aus der Papierindustrie.

Mit der erfindungsgemäßen hydraulischen Fördereinrichtung gelingt weiters in einfacher Weise ein Luftabschluss zum Vergasungsraum, der insbesondere durch die im Verdichtungskonus erfolgende Komprimierung des Brennstoffes verstärkt wird. Der Luftabschluss ist ein wesentlicher Faktor für die Güte des Vergasungsprozesses. Der Verdichtungskonus ist ein wichtiger Bestandteil der Vergasungseinheit, denn er regelt durch Verkleinerung des Öffnungsquerschnittes den Komprimierungsdruck bzw. verringert damit die Luftzwischenräume der verschiedenen Brennstoffe. Damit ist der Komprimierungsdruck auch ausschlaggebend für die Reinheit und Qualität des im Vergasungsreaktor hergestellten Gases. Durch die starke Komprimierung des Brennstoffes wird ein Brennstoffpfropfen innerhalb des Förderrohrs hergestellt, der einen hervorragenden und sicheren Luftabschluss darstellt.

Vorteilhaft ist es hierbei, wenn der Brennstoffpfropfen möglichst nahe am Vergasungsreaktor angeordnet ist, d.h. der Luftabschluss möglichst unmittelbar im Bereich der Aufgabeöffnung des Vergasungsreaktors erfolgt. Dadurch wird erreicht, dass die Strahlungswärme im Vergasungsreaktor nicht in den Bereich der Brennstoffförderung gelangt und damit zu einer übermäßigen thermischen Belastung der Fördereinrichtung führt und somit den Kühlungsaufwand erhöhen würde. Eine bevorzugte Weiterbildung der erfindungsgemäßen Fördervorrichtung sieht daher vor, dass der zweite, den Verdichtungskonus aufweisende Förderrohrabschnitt an die Aufgabeöffnung des Vergasungsreaktors angeschlossen ist. Bevorzugt geht der Verdichtungskonus hierbei direkt in die Aufgabeöffnung über.

Unterschiedliche Brennstoffe können verschiedene Komprimierungsgrade erfordern. Deshalb ist es besonders vorteilhaft, wenn der vom Verdichtungskonus zur Verfügung gestellte Komprimierungsgrad an den jeweiligen Brennstoff angepasst werden kann. Zu diesem Zweck ist es erfindungsgemäß vorgesehen, dass der zweite, den Verdichtungskonus aufweisende Förderrohrabschnitt als gesondertes, austauschbares Rohrstück ausgebildet ist. Für den Betrieb der Fördereinrichtung kann daher eine Mehrzahl austauschbarer Rohrstücke vorrätig gehalten werden, die jeweils einen Verdichtungskonus mit anderem Komprimierungsgrad aufweisen, und es werden je nach eingesetztem Brennstoff das Rohrstück mit dem jeweils passenden Komprimierungsgrad montiert. Wenn das austauschbare Rohrstück bzw. der Verdichtungskonus unmittelbar in den Vergasungsreaktor mündet, ist es vorteilhaft, wenn der zweite, den Verdichtungskonus aufweisende Förderrohrabschnitt unter Zwischenschaltung eines Formstücks an die Aufgabeöffnung des Vergasungsreaktors anschließbar ist. Ein solches Formstück hat die Aufgabe die Vorderseite des Verdichtungskonus gegen allzu hohe Wärmebelastung zu schützen. Dies ist insbesondere dann günstig, wenn sich der Konus in der Höhe eines Wirbelschichtbettes des Vergasungsreaktors befindet, wo mit einer hohen Strahlungstemperatur von 850 - 950°C zu rechnen ist. Das Formstück hat außerdem die Aufgabe, einen Übergang zwischen dem Verdichtungskonus, der einen je nach dessen Konuswinkel unterschiedlichen Öffnungsdurchmesser aufweist, und der Aufgabeöffnung des Vergasungsreaktors herzustellen. Zu jedem verschiedenen Konus gehört somit jeweils ein Formstück. Das Brennmaterial wird aus dem Verdichtungskonus über das Formstück in den Vergasungsreaktor gefördert, wobei das Formstück einen Innendurchmesser aufweisen kann, der sich in Förderrichtung vergrößert, um einen kontinuierlichen Übergang auf den Innendurchmesser der Aufgabeöffnung des Vergasungsreaktors zu erreichen.

Um den Ein- und Ausbau des austauschbaren Rohrstücks zu erleichtern, sieht eine bevorzugte Weiterbildung vor, dass ein den ersten Förderrohrabschnitt bildendes Rohrstück und das zweite, austauschbare Rohrstück durch einen Zwischenabschnitt des Förderrohres bildendes Passstück miteinander verbunden sind. Das Passstück wird bei einem Wechsel des Verdichtungskonus entfernt, um den Verdichtungskonus aus seiner Endlage heraus ziehen zu können. In besonders vorteilhafter Weise ist das Passstück in radialer Richtung aus dem Förderrohr ausbaubar.

Da die Fördervorrichtung direkt in den Vergasungsreaktor mündet, in dem Temperaturen von bis zu 850 - 950°C herrschen, ist es vorteilhaft, die Fördervorrichtung zumindest in dem dem Vergasungsreaktor benachbarten Bereich zu kühlen, damit der Brennstoff nicht anfängt im Förderrohr zu vergasen. Gemäß einer bevorzugten Ausbildung sieht die Erfindung daher vor, dass das Förderrohr in einem der Aufgabeöffnung des Vergasungsreaktors benachbarten Endabschnitt von einem Kühlmantel einer Kühlvorrichtung umgeben ist. Der Kühlmantel weist zumindest einen Kühlflüssigkeitszulauf und einen Kühlflüssigkeitsablauf auf und ist mit Kühlflüssigkeit, wie z.B. Wasser durchströmbar. Bevorzugt soll die Kühlwasseraustrittstemperatur 60°C nicht übersteigen, da andernfalls allfällige Plastikanteile im Brennstoff zu schmelzen beginnen.

Der Kühlmantel umgibt hierbei bevorzugt zumindest den mit dem Verdichtungskonus ausgebildeten Förderrohrabschnitt. Bevorzugt bildet der Kühlmantel mit dem Förderrohrabschnitt eine Einheit.

Die Kühlflüssigkeitstemperatur ist ein Indikator für die auf das Förderrohr und den darin angeordneten Brennstoff wirkende thermische Belastung und kann daher in einfacher Weise für Steuerungszwecke herangezogen werde. Die Erfindung ist in diesem Zusammenhang bevorzugt derart weitergebildet, dass am Kühlmantel ein Kühlflüssigkeitszulauf und ein Kühlflüssigkeitsablauf angeschlossen sind, wobei ein Temperaturfühler zum Messen der Austritts-Temperatur der aus dem Kühlmantel über den Kühlflüssigkeitsablauf abgezogenen Kühlflüssigkeit vorgesehen ist, dessen Messwerte einer Steuervorrichtung zugeführt sind, die mit dem Antrieb einer Kühlflüssigkeits-Umwälzpumpe zusammenwirkt, um die Durchflussmenge in Abhängigkeit von der gemessenen Kühlflüssigkeitstemperatur im kontinuierlichen Betrieb zu steuern. Die Steuerung kann beispielsweise auch so vorgenommen werden, dass im Anfahrbetrieb und bei maximaler Umwälzpumpenleistung die Vorschubbewegung des Presskolbens in Abhängigkeit von den Temperaturmesswerten schneller oder langsamer fortgesetzt wird.

Beim An- und Abfahren des Vergasungsreaktors kann es vorkommen, dass sich noch kein Brennstoff oder kein Brennstoff, mehr im Verdichtungskonus befindet, sodass das heiße Gas aus dem Reaktor in das Fördersystem eindringen und im Förderrohr oder im Schüttgutbehälter einen Rückbrand verursachen kann. Um dies zu vermeiden, sieht eine bevorzugte Weiterbildung vor, dass der erste Förderrohrabschnitt mit einem quer zur Förderrichtung verschiebbaren Absperrschieber versehen ist.

Eine weitere Sicherheitsmaßnahme ist das Vorsehen eines Inertgasanschlusses am Förderrohr. Zur Inertisierung der Vergasungseinheit wird Inertgas, wie z.B. Stickstoff zielgerichtet in die Anlage geleitet, damit sich bei einem An- oder Abfahrbetrieb bzw. einem Störfall kein explosionsartiges Gasgemisch bilden kann. Bei gravierenden Störfällen ist es grundsätzlich notwendig, zusätzlich die Brennstoffzufuhr zur Vergasungseinheit durch Schließen des Absperrschiebers zu trennen.

Um die Baulänge des Presskolbens oder des den Verschiebeantrieb des Kolbens bildenden Hydraulikzylinders zu reduzieren, ist bevorzugt vorgesehen, dass die Stirnfläche des Presskolbens an einem in Förderrichtung ausfahrbaren Teil des Presskolbens ausgebildet ist. Der Presskolben kann auf diese Weise bei Bedarf verlängert werden. Das Ausfahren erfolgt zum Beispiel mit Hilfe eines im Presskolben untergebrachten Hydraulikzylinders. Im Normalbetrieb, d.h. für die kontinuierliche Förderung des Brennstoffes wird der Presskolben im nicht verlängerten Zustand betrieben. Lediglich für den Entleerungshub, bei dem der im Fördersystem befindliche Brennstoff möglichst bis hinter das Passtück ausgestoßen werden soll, wird die Baulänge des Presskolbens durch Ausfahren des ausfahrbaren Vorderteils verlängert, zum Beispiel um 500 - 1000mm. Der Presskolben bekommt dadurch beim Entleerungshub weiters eine bessere Führungsstabilität. Für die Einleitung des Entleerungshubes durchläuft der Presskolben zunächst seinen maximalen Arbeitshub in Förderrichtung bis der Presskolben bis unter den Schüttgutbehälter gelangt, um den Brennstoffeintrag in das Förderrohr vollständig zu versperren. Danach wird automatisch der ausfahrbare Vorderteil des Presskolbens ausgefahren, um den im Förderrohr noch befindlichen Brennstoff bis auf einen kurzen Pfropfen zu entfernen. Nach Rücklauf des Presskolbens kann der Absperrschieber geschlossen werden, um die Inertisierung bzw. das Abfahren der Anlage einzuleiten.

Für die kontinuierliche Förderung des Brennstoffes ist es entscheidend, dass der Brennstoff im Schüttgutbehälter nicht agglomeriert und zur Brückenbildung neigt, wodurch das Herausfallen des Brennstoffes aus dem Schüttgutbehälter durch Schwerkraft und damit der Austrag in das Förderrohr behindert würde. Der Austrag wird grundsätzlich dadurch begünstigt, dass, wie dies einer bevorzugten Weiterbildung entspricht, der Schüttgutbehälter einen Ablauftrichter aufweist. Der Brennstoff sollte hierbei in einer auf ca. 4 - 5 cm Stückchendurchmesser zerkleinerten Größe vorliegen, damit eine Brückenbildung im Schüttgutbehälter sowie Blockaden in der Förderung durch den Presskolben vermieden werden. Bei Anlagen größerer Leistung kann das Brennstoff-Häcksel-Gut entsprechend der größeren Förder-Komponenten aber auch auf max. 8 cm Stückchendurchmesser angepasst werden.

Eine Blockade im Schüttgutbehälter wird bevorzugt weiters dadurch vermieden, dass die in Förderrichtung gesehen vordere Wand des Ablauftrichters einen Winkel von 0 - 20°, bevorzugt 5 - 15° mit einer Normalen auf die Förderrohrachse einschließt. Die genannte Wand verläuft somit relativ steil nach unten, damit der Brennstoff nicht die Möglichkeit hat, sich auf Grund des von dem Presskolben in Förderrichtung ausgeübten Drucks an der Wand aufzustauen. Die genannte steile Ausführung der näher zum Vergasungsreaktor liegenden Wand des Schüttgutbehälters führt weiters dazu, dass der Schüttgutbehälter näher zum Vergasungsreaktor angeordnet werden kann, sodass der Förderweg reduziert werden kann.

Weiters kann bevorzugt vorgesehen sein, dass die in Förderrichtung gesehen hintere Wand des Ablauftrichters einen Winkel von 10 - 40°, bevorzugt 20 - 35° mit einer Normalen auf die Förderrohrachse einschließt, womit auch diese Wand relativ steil ausgebildet ist.

Sollten im Austragsbereich des Schüttgutbehälters dennoch Blockaden auftreten, können diese bevorzugt dadurch behoben werden, das im Bereich der Austragsöffnung des Ablauftrichters eine Auflockerungseinrichtung für den Brennstoff vorgesehen ist, die bevorzugt eine Vielzahl von über den Umfang verteilten Lufteinblasöffnungen umfasst.

Wenn, wie dies einer weiteren bevorzugten Weiterbildung entspricht, die Achse des Förderrohrs nach unten geneigt verläuft, wobei der von der Horizontalen aus gemessene Neigungswinkel bevorzugt zwischen 5 und 30° beträgt, wird weitgehend verhindert, das Bettmaterial aus dem Vergasungsraum direkt in den Mündungsbereich des Konus oder weiter in das Förderrohr eindringen kann. Weiterhin wird dadurch erreicht dass der Brennstoff immer zielgerichtet in das Wirbelschichtbett des Vergasungsreaktors hineingedrückt wird.

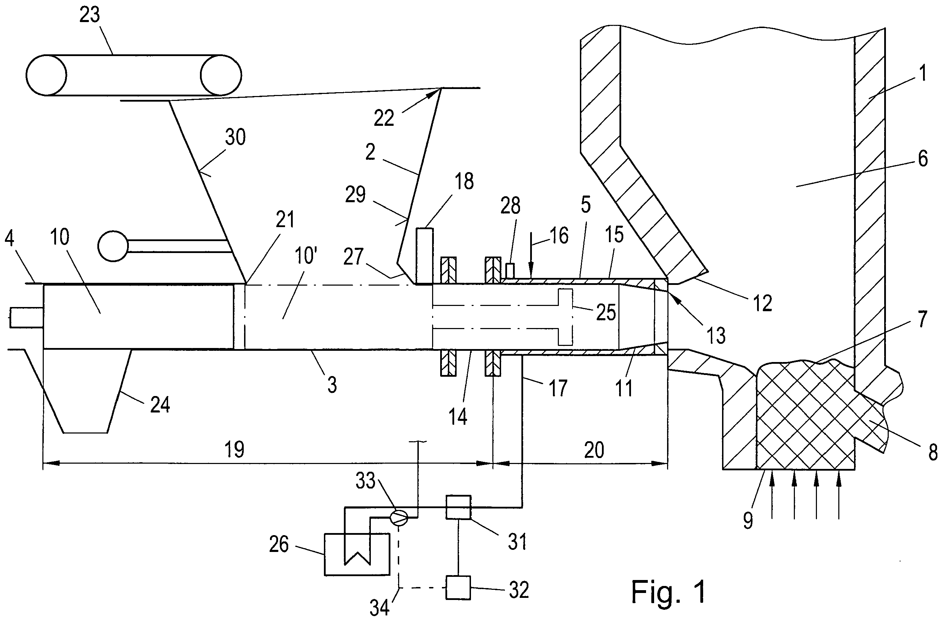

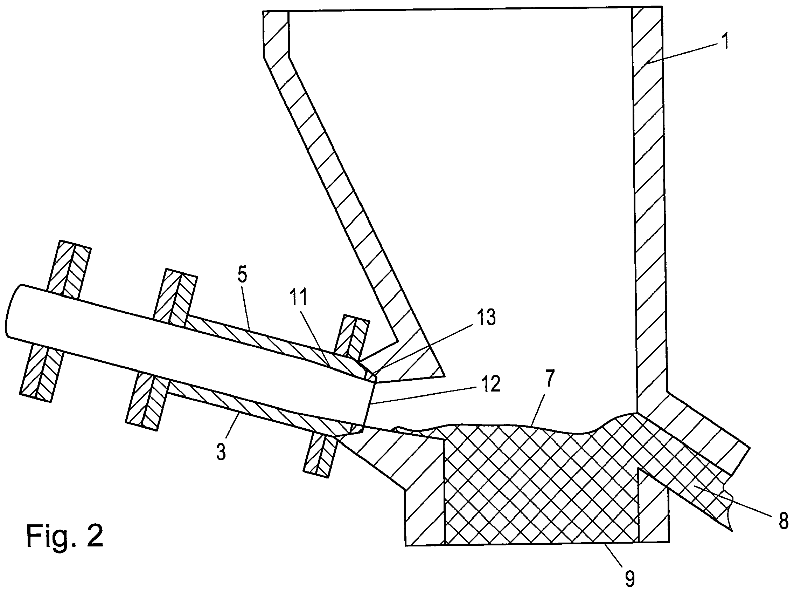

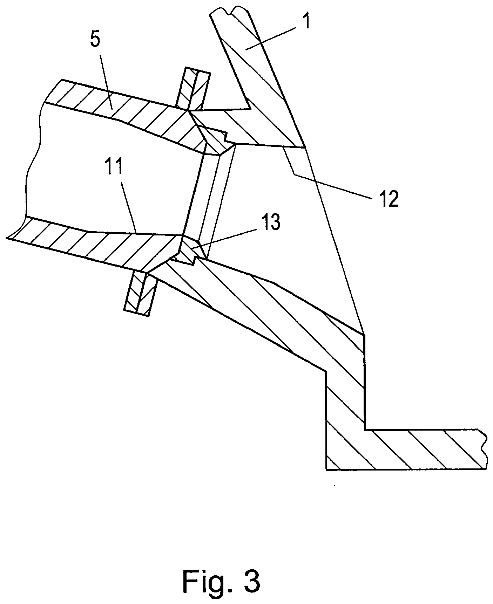

Die Erfindung wird nachfolgend anhand der in der Zeichnung schematisch dargestellten Ausführungsbeispiele näher erläutert. In dieser zeigen Fig.1 eine Schnittansicht eines Vergasungsreaktors mit der erfindungsgemäßen Fördervorrichtung, Fig.2 eine Schnittansicht der erfindungsgemäßen Vorrichtung, welche ein um 15° geneigtes Förderrohr aufweist und Fig.3 eine Detailansicht der Ausbildung gemäß Fig.2 im Bereich des Übergangs zwischen dem zweiten, austauschbaren Förderrohrabschnitt und dem Vergasungsreaktor.

Fig. 1 zeigt einen Vergasungsreaktor 1, welcher mit einer Vorrichtung zur Förderung von Brennstoffen verbunden ist, die einen Schüttgutbehälter 2, ein Förderrohr 3, in das ein Austrag des Schüttgutbehälters 2 mündet und eine im Förderrohr 3 angeordnete mechanische Fördereinrichtung 4 aufweist. Beim Vergasungsreaktor 1 handelt es sich insbesondere um einen Reaktor, wie er in der AT 405937 B beschrieben ist.

Der Vergasungsreaktor 1 umfasst eine Vergasungszone 6 für die Aufnahme eines stationären Bettes 7 und eine Verbrennungszone (in der Zeichnung nicht dargestellt) für die Aufnahme eines Wirbelbettes. Der Vergasungsreaktor 1 und die Verbrennungszone (in der Zeichnung nicht dargestellt) sind im Bodenbereich durch eine schleusenartige Einrichtung 8 miteinander verbunden, wobei die Vergasungszone eine Gasabfuhr (in der Zeichnung nicht dargestellt) und einen Düsenboden 9 zum Eindüsen von insbesondere Wasserdampf oder CO₂ aufweist.

Die mechanische Fördereinrichtung 4 umfasst einen hydraulisch antreibbaren, in einem ersten, zylindrischen Abschnitt 19 des Förderrohrs 3 verschieblich geführten Presskolben 10. Der Presskolben 10 kann zwischen der in der Zeichnung mit 10 bezeichneten, zurückgezogenen Position und der mit 10' bezeichneten, vorderen Position hin- und herbewegt werden. Weiters weist das Förderrohr 3 in seinem zweiten, axialen Abschnitt 20 einen sich in Förderrichtung des Brennstoffs kontinuierlich verringernden Innenquerschnitt zur Ausbildung eines Verdichtungskonus 11 auf. Der den Verdichtungskonus 11 aufweisende Förderrohrabschnitt 5 ist austauschbar und unter Zwischenschaltung eines Formstücks 13 an die Aufgabeöffnung 12 des Vergasungsreaktors 1 angeschlossen.

Der austauschbare Förderrohrabschnitt 5, welcher von einem Kühlmantel 15 einer Kühlvorrichtung umgeben ist, ist mit Hilfe einer Flanschverbindung an das Passstück 14 angeschlossen. Der Kühlmantel 15 weist einen Kühlflüssigkeitszulauf 16 und eine Kühlflüssigkeitsablauf 17 auf. Der Kühlflüssigkeitsablauf 17 ist mit dem Wärmetauscher 26 verbunden, in dem die nach dem Durchlaufen des Kühlmantels erwärmte Kühlflüssigkeit abgekühlt wird, worauf diese über den Kühlmittelzulauf 16 erneut der Kühlvorrichtung zugeführt wird.

Um den Austausch des Förderrohrabschnitts 5 zu ermöglichen, muss zunächst das Passstück 14 entfernt werden, wofür die Flanschverbindungen des Passstücks 14 zu beiden angrenzenden Förderrohrabschnitten gelöst werden und das Passstück 14 quer zur Förderrohrachse aus dem Rohrverlauf entfernt wird. Der dadurch entstehende Freiraum erlaubt es, im Anschluss daran den Verdichtungskonus 11 aufweisenden Förderrohrabschnitt 5 horizontal entgegen der Förderrichtung aus seiner Einbaulage zu ziehen und durch einen neuen Förderrohrabschnitt 5 auszutauschen. Der Austausch dient dazu, Rohre mit voneinander verschiedenem Verdichtungsgrad des Verdichtungskonus 11 einzusetzen.

Der erste Förderrohrabschnitt 19 ist mit einem quer zur Fördereinrichtung verschiebbaren Absperrschieber 18 versehen. Wenn sich zum Zeitpunkt des An- und Abfahrens des Vergasungsreaktors 1 noch kein Brennstoff oder kein Brennstoff mehr im Verdichtungskonus 11 befindet, kann durch die Betätigung des verschiebbaren Absperrschiebers 18 ein Rückbrand in das Förderrohr 3 oder den Schüttgutbehälter 2 vermieden werden. Das Förderrohr weist weiters einen Inertgasanschluss 28 auf, um bei Bedarf Inertgas in das Innere des Förderrohrs zu bringen.

Der Schüttgutbehälter 2 weist die Form eines Trichters auf, d.h. eine sich zur Austragsöffnung 21 des Schüttgutbehälters 2 hin konisch verjüngende Form. Hierbei zeigt die in Förderrichtung gesehen vordere Wand 29 des Schüttgutbehälters 2 einen größeren Neigungswinkel als die in Förderrichtung gesehen hintere Wand 30, um Anstauungen des Brennstoffs an der vorderen Wand 29 des Schüttgutbehälters 2 zu vermeiden. Im Bereich der Austragsöffnung 21 des Ablauftrichters befindet sich eine nicht näher dargestellt Auflockerungseinrichtung 27, die zum Beispiel eine Mehrzahl von über den Umfang verteilten, mit Luft versorgten, Luftdüsen umfasst. Um Brennstoff in die Anlage einzuspeisen, ist das Förderband 23 mit dem Eintragsbereich 22 des Schüttgutbehälters 2 verbunden. Zusätzlich sieht die erfindungsgemäße Vorrichtung den Reinigungsschacht 24 vor, welcher bei Bedarf einen Zugang in den ersten Abschnitt 19 des Förderrohrs 3 ermöglicht.

Der Presskolben 10 beherbergt einen ausfahrbaren Teil 25, welcher beim Herunterfahren der Anlage dazu dient, den Brennstoff aus dem Förderrohr 3 herauszufördern. Dazu wird der Presskolben zunächst in die Position 10' verfahren und dann der ausfahrbare Teil 25 des Presskolbens 10 ausgefahren.

Beim Anfahren der Anlage kann die Vorschubbewegung des Presskolbens 10 in Abhängigkeit vom Temperaturanstieg im Vergasungsreaktor gesteuert werden. Während der Aufheizphase des Vergasungsreaktors wird das Brennmaterial entsprechend des Anstiegs der mit Hilfe des Temperaturfühlers 31 gemessenen Kühlflüssigkeitstemperatur nachgefahren, um diese konstant zu halten. Dabei wird die Kühlflüssigkeitsaustrittstemperatur des Kühlmantels kontinuierlich überwacht. Bei einer unzulässig hohen Kühlflüssigkeitsaustrittstemperatur in der Aufheizphase, kann der Presskolben 10 zusätzliches Material langsam nachschieben, um den Innenbereich des Verdichtungskonus vor zu hoher Wärmestrahlung aus der Vergasungszone zu schützen, die durch die Vergasung des Brennstoffs vorne an der Aufgabeöffnung 12 hervorgerufen wird. Weiterhin wird die Umwälzmenge der Kühlflüssigkeitspumpe 33 bei steigender Temperatur erhöht. Die Geschwindigkeit des Presskolbens 10 kann entsprechend der Temperatursteigerung im Vergasungsreaktor ebenfalls erhöht werden, sodass bei Erreichung der Endtemperatur von ca. 850°C in der Vergasungszone die erforderliche Menge Brennstoff, entsprechend der Auslegung der Anlage, zur Vergasung dem Reaktor zur Verfügung steht. Für die temperaturabhängige Steuerung ist der Temperaturfühler 31 mit einer Steuervorrichtung 32 verbunden, in dem die Steuersignale für die Kühlflüssigkeitspumpe 33 generiert werden. Für die Übertragung der Steuersignale an das Pumpenaggregat ist eine Steuerleitung 34 vorgesehen.

Fig. 2 zeigt ausschnittsweise eine abgewandelte Ausbildung der Vorrichtung gemäß Fig. 1, welche eine nach unten geneigte Achse des Förderrohrs 3 aufweist. Die geneigte Förderrohrachse schließt mit der Horizontalen einen Winkel von 15° ein.

Wie aus der Detaildarstellung gemäß Fig. 3 hervorgeht ist das den Verdichtungskonus 11 aufweisende, austauschbare Rohrstück 5 des Förderrohres unter Zwischenschaltung eines Formstücks 13 an die Aufgabeöffnung 12 des Vergasungsreaktors 1 angeschlossen.

## Patentansprüche

1. Verwendung einer Vorrichtung zur Förderung von Brennstoffen in einen Vergasungsreaktor, wobei die Vorrichtung einen Schüttgutbehälter, ein Förderrohr, in das ein Austrag des Schüttgutbehälters mündet und das an eine seitliche Aufgabeöffnung des Vergasungsreaktors anschließbar ist und eine im Förderrohr angeordnete mechanische Fördereinrichtung umfasst, wobei die Fördereinrichtung von einem hydraulisch antreibbaren, in einem ersten, zylindrischen Abschnitt (19) des Förderrohrs (3) verschieblich geführten Presskolben (10) gebildet ist und das Förderrohr (3) zur Ausbildung eines Verdichtungskonus (11) in einem zweiten axialen Abschnitt (20) einen sich in Förderrichtung des Brennstoffs kontinuierlich verringernden Innenquerschnitt aufweist, wobei der zweite, den Verdichtungskonus (11) aufweisende Förderrohrabschnitt (20) als gesondertes, austauschbares Rohrstück (5) ausgebildet ist, **dadurch gekennzeichnet, dass** in Abhängigkeit vom eingesetzten Brennstoff ein Rohrstück (5) mit einem Verdichtungskonus montiert wird, der einen passenden Komprimierungsgrad bereitstellt.

2. Verwendung einer Vorrichtung nach Anspruch 1, **dadurch gekennzeichnet, dass** der zweite, den Verdichtungskonus (11) aufweisende Förderrohrabschnitt (20) an die Aufgabeöffnung (12) des Vergasungsreaktors (1) angeschlossen ist.

3. Verwendung einer Vorrichtung nach Anspruch 1 oder 2, **dadurch gekennzeichnet, dass** der zweite, den Verdichtungskonus (11) aufweisende Förderrohrabschnitt (20) unter Zwischenschaltung eines Formstücks (13) an die Aufgabeöffnung (12) des Vergasungsreaktors (1) anschließbar ist.

4. Verwendung einer Vorrichtung nach einem der Ansprüche 1 bis 3, **dadurch gekennzeichnet, dass** ein den ersten Förderrohrabschnitt (19) bildendes Rohrstück und das zweite, austauschbare Rohrstück (5) durch ein einen Zwischenabschnitt des Förderrohres bildendes Passstück (14) miteinander verbunden sind, wobei bevorzugt das Passstück (14) in radialer Richtung aus dem Förderrohr (3) ausbaubar ist.

5. Verwendung einer Vorrichtung nach einem der Ansprüche 1 bis 4, **dadurch gekennzeichnet, dass** der Presskolben (10) nach dem Durchlaufen seines maximalen Arbeitshubes in Förderrichtung den Brennstoffeintrag in das Förderrohr (3) vollstandig versperrt.

6. Verwendung einer nach einem der Ansprüche 1 bis 5, **dadurch gekennzeichnet, dass** das Förderrohr (3) in einem der Aufgabeöffnung (12) des Vergasungsreaktors (1) benachbarten Endabschnitt von einem Kühlmantel (15) einer Kühlvorrichtung umgeben ist, wobei bevorzugt der Kühlmantel (15) zumindest den mit dem Verdichtungskonus (11) ausgebildeten Förderrohrabschnitt umgibt.

7. Verwendung einer Vorrichtung nach einem der Ansprüche 1 bis 6, **dadurch gekennzeichnet, dass** der erste Förderrohrabschnitt (19) mit einem quer zur Förderrichtung verschiebbaren Absperrschieber (18) versehen ist.

8. Verwendung einer nach einem der Ansprüche 1 bis 7, **dadurch gekennzeichnet, dass** das Förderrohr (3) einen Inertgasanschluss (28) aufweist.

9. Verwendung einer Vorrichtung nach einem der Ansprüche 1 bis 8, **dadurch gekennzeichnet, dass** die Stirnfläche des Presskolbens (10) an einem in Förderrichtung ausfahrbaren Teil (25) des Presskolbens (10) ausgebildet ist.

10. Verwendung einer Vorrichtung nach einem der Ansprüche 1 bis 9, **dadurch gekennzeichnet, dass** der Schüttgutbehälter (2) einen Ablauftrichter aufweist, wobei bevorzugt die in Forderrichtung gesehen vordere Wand (29) des Ablauftrichters einen Winkel von 0 - 20°, bevorzugt 5 - 15° mit einer Normalen auf die Förderrohrachse einschlisßt.

11. Verwendung einer Vorrichtung nach Anspruch 10, **dadurch gekennzeichnet, dass** die in Förderrichtung gesehen hintere Wand (30) des Ablauftrichters einen Winkel von 10 - 40°, bevorzugt 20 - 35° mit einer Normalen auf die Förderrohrachse einschließt.

12. Verwendung einer
Vorrichtung nach Anspruch 10 oder 11, **dadurch gekennzeichnet, dass** im Bereich der Austragsöffnung (21) des Ablauftrichters eine Auflockerungseinrichtung (27) für den Brennstoff vorgesehen ist, die bevorzugt eine Vielzahl von über den Umfang verteilten Lufteinblasöffnungen umfasst.

13. Verwendung einer Vorrichtung nach einem der Ansprüche 1 bis 12, **dadurch gekennzeichnet, dass** die Achse des Förderrohrs (3) nach unten geneigt verläuft, wobei der von der Horizontalen aus gemessene Neigungswinkel bevorzugt zwischen 5 und 30° beträgt.

14. Verwendung einer nach Anspruch 6, **dadurch gekennzeichnet, dass** am Kühlmantel (15) eine Kühlflüssigkeitszulauf (16) und eine Kühlflüssigkeitsablauf (17) angeschlossen sind, wobei ein Temperaturfühler (31) zum Messen der Temperatur der aus dem Kühlmantel (15) über den Kühlflüssigkeitsablauf (16) abgezogenen Kühlflüssigkeit vorgesehen ist, dessen Messwerte einer Steuervorrichtung (32) zugeführt sind, die mit dem Antrieb einer Kühlflüssigkeitspumpe (33) zusammenwirkt, um die pro Zeiteinheit geförderte Kühlflüssigkeit (17) in Abhängigkeit von der gemessenen Kühlflüssigkeitstemperatur zu steuern.

## Claims

1. Use of a device for conveying fuels into a gasification reactor, comprising a bulk material container, a conveying pipe, into which a discharge of the bulk material container opens and which can be connected to a lateral infeed opening of the gasification reactor, and a mechanical conveying apparatus disposed in the conveying pipe, wherein the conveying apparatus is formed by a hydraulically drivable plunger, which is movably guided in a first, cylindrical section (19) of the conveying pipe (3), and the conveying pipe (3) has an internal cross-section, which decreases continuously in the conveying direction of the fuel in order to form a compacting cone (11) in a second axial section (20), wherein the second conveying pipe section (20) comprising the compacting cone (11) is configured as a separate exchangeable pipe portion (5), **characterized in that** depending on the fuel employed a pipe portion (5) is installed with a compacting cone providing an appropriate degree of compaction.

2. Use of a device according to claim 1, **characterized in that** the second conveying pipe section (20) comprising the compacting cone (11) is connected to the infeed opening (12) of the gasification reactor (1).

3. Use of a device according to claim 1 or 2, **characterized in that** the second conveying pipe section (20) comprising the compacting cone (11) is connected to the infeed opening (12) of the gasification reactor (1) by interposing a fitting (13).

4. Use of a device according to anyone of claims 1 to 3, **characterized in that** a pipe portion forming the first conveying pipe section (19) and the second exchangeable pipe portion (5) are interconnected via an adapter (14) forming an intermediate section of the conveying pipe, wherein the adapter (14) can be preferably removed from the conveying pipe (3) in the radial direction.

5. Use of a device according to anyone of claims 1 to 4, **characterized in that** the plunger (10) completely blocks off the ingress of fuel into the conveying pipe (3) after it has completed its maximum working stroke in the conveying direction,

6. Use of a device according to anyone of claims 1 to 5, **characterized in that** the conveying pipe (3) in an end section adjacent to the infeed opening (12) of the gasification reactor (1) is surrounded by a cooling jacket (15) of a cooling device, wherein the cooling jacket (15) preferably surrounds at least the conveying pipe section formed with the compacting cone (11).

7. Use of a device according to anyone of claims 1 to 6, **characterized in that** the first conveying pipe section (19) is provided with a shut-off valve (18), which can be displaced perpendicularly to the conveying direction.

8. Use of a device according to anyone of claims 1 to 7, **characterized in that** the conveying pipe (3) comprises an inert gas connection (28).

9. Use of a device according to anyone of claims 1 to 8, **characterized in that** the front face of the plunger (10), is formed on a part (25) of the plunger (10) which can be extended in the conveying direction.

10. Use of a device according to anyone of claims 1 to 9, **characterized in that** the bulk material container (2) comprises a discharge hopper, wherein the front wall (29) of the discharge hopper as seen in the direction of conveying preferably encloses an angle of 0 - 20°, preferably 5 - 15° with a normal to the conveying pipe axis.

11. Use of a device according to claim 10, **characterized in that** the rear wall (30) of the discharge hopper as seen in the conveying direction encloses an angle of 10 - 40°, preferably 20 - 35° with a normal to the conveying pipe axis.

12. Use of a device according to claim 10 or 11, **characterized in that** a disaggregation device (27) is provided for the fuel in the region of the discharge opening (21) of the discharge hopper, which preferably comprises a plurality of air injection openings distributed over the circumference.

13. Use of a device according to anyone of claims 1 to 12, **characterized in that** the axis of the conveying pipe (3) is inclined downwards, wherein the angle of inclination measured with respect to the horizontal is preferably in the range of 5° to 30°.

14. Use of a device according to claim 6, **characterized in that** a cooling fluid inlet (16) and a cooling fluid outlet (17) are connected to the cooling jacket (15), wherein a temperature sensor (31) is provided to measure the temperature of the cooling fluid withdrawn from the cooling jacket (15) via the cooling fluid outlet (16), and its measured values are fed to a control device (32), which cooperates with the drive of a cooling fluid pump (33) in order to control the cooling fluid (17) conveyed per time unit as a function of the measured cooling fluid temperature.

## Revendications

1. Utilisation d'un dispositif pour acheminer des combustibles dans un réacteur de gazéification, dans laquelle le dispositif comprend un récipient de matières en vrac, un tuyau de transport, dans lequel débouche une décharge du récipient de matières en vrac et qui peut être raccordé à une ouverture d'alimentation latérale du réacteur de gazéification et un dispositif de transport mécanique- agencé dans le tuyau de transport, dans laquelle le dispositif de transport est formé par un piston de compression (10) actionnable par voie hydraulique et guidé mobile dans une première section cylindrique (19) du tuyau de transport (3) et le tuyau de transport (3) présente pour former un cône de compression (11) dans une seconde section axiale (20) une section transversale interne se rétrécissant en continu dans le sens de transport du combustible, dans laquelle la seconde section de tuyau de transport, dans laquelle la seconde section de tuyau de transport (20) présentant le cône de compression (11) est formée en fragment de tuyau séparé échangeable (5), **caractérisé en ce que**, en fonction du combustible utilisé, on monte un fragment de tuyau (5) avec un cône de compression qui assure un degré de compression adéquat.

2. Utilisation d'un dispositif selon la revendication 1, **caractérisée en ce que** la seconde section de tuyau de transport (20) présentant le cône de compression (11) est raccordée à l'ouverture d'alimentation (12) du réacteur de gazéification (1).

3. Utilisation d'un dispositif selon la revendication 1 ou 2, **caractérisée en ce que** la seconde section de tuyau de transport (20) présentant le cône de compression (11) peut être raccordée à l'ouverture d'alimentation (12) du cône du réacteur de gazéification (1) en intercalant une pièce façonnée (13).

4. Utilisation d'un dispositif selon l'une quelconque des revendications 1 à 3, **caractérisée en ce qu'**un fragment de tuyau formant la première section de tuyau de transport (19) et le second fragment de tuyau échangeable (5) sont reliés l'un à l'autre par une pièce adaptée (14) formant une section intermédiaire du tuyau de transport, dans laquelle de préférence la pièce adaptée (14) peut être démontée du tuyau de transport (3) dans la direction radiale.

5. Utilisation d'un dispositif selon l'une quelconque des revendications 1 à 4, **caractérisée en ce que** le piston de compression (10) bloque complètement l'entrée de combustible dans le tuyau de transport (3) après le balayage de sa course de travail maximale dans le sens de transport.

6. Utilisation d'un dispositif selon l'une quelconque des revendications 1 à 5, **caractérisée en ce que** le tuyau de transport (3) est entouré, dans une section d'extrémité voisine de l'ouverture d'alimentation (12) du réacteur de gazéification (1), par une chemise de refroidissement (15) d'un dispositif de refroidissement, dans laquelle la chemise de refroidissement (15) entoure de préférence au moins la section de tuyau de transport formée avec le cône de compression (11).

7. Utilisation d'un dispositif selon l'une quelconque des revendications 1 à 6, **caractérisée en ce que** la première section de tuyau de transport (19) est pourvue d'une vanne d'arrêt (18) qui peut coulisser transversalement à la direction de transport.

8. Utilisation d'un dispositif selon l'une quelconque des revendications 1 à 7, **caractérisée en ce que** le tuyau de transport (3) présente un raccord de gaz inerte (28).

9. Utilisation d'un dispositif selon l'une quelconque des revendications 1 à 8, **caractérisée en ce que** la face avant du piston de compression (10) est formée sur une partie (25) du piston de compression (10) qui peut se déployer dans le sens de transport.

10. Utilisation d'un dispositif selon l'une quelconque des revendications 1 à 9, **caractérisée en ce que** le récipient de matières en vrac (2) présente une trémie de décharge, dans laquelle de préférence la paroi avant (29) - vue dans le sens du transport - de la trémie de décharge inclut un angle de 0 à 20°, de préférence de 5 à 15° avec une normale à l'axe du tuyau de transport.

11. Utilisation d'un dispositif selon la revendication 10, **caractérisée en ce que** la paroi arrière (30) - vue dans le sens du transport - de la trémie de décharge inclut un angle de 10 à 40 °, de préférence de 20 à 35 ° avec une normale à l'axe du tuyau de transport.

12. Utilisation d'un dispositif selon la revendication 10 ou 11, **caractérisée en ce que**, dans la zone de l'ouverture de décharge (21) de la trémie de décharge, il est prévu un dispositif de dispersion (27) pour le combustible, qui comprend de préférence une pluralité d'ouvertures d'injection d'air distribuées sur la périphérie.

13. Utilisation d'un dispositif selon l'une quelconque des revendications 1 à 12, **caractérisée en ce que** l'axe du tuyau de transport (3) s'étend incliné vers le bas, dans laquelle l'angle d'inclinaison mesuré à partie de l'horizontale atteint de préférence entre 5 et 30 °.

14. Utilisation d'un dispositif selon la revendication 6, **caractérisée en ce que** sont raccordées sur la chemise de refroidissement (15) une admission de liquide de refroidissement (16) et une décharge de liquide de refroidissement (17), dans laquelle il est prévu une sonde de température (31) pour mesurer la température du liquide de refroidissement évacué de la chemise de refroidissement (15) via la décharge de liquide de refroidissement (16), dont les valeurs de mesure sont acheminées à un dispositif de commande (32) qui coopère avec la commande d'une pompe à liquide de refroidissement (33) pour commander le liquide de refroidissement (17) alimenté par unité de temps en fonction de la température de liquide de refroidissement mesurée.
